# EUROPEAN PATENT APPLICATION

(11) **EP 1 322 088 A2**
(43) Date of publication of application: **25.06.2003**
(21) Application number: 02028074.9
(22) Date of filing: 17.12.2002
(51) Int. Cl.: H04L 29/06, G06F 1/00

(54) **Method and apparatus for centralized processing of hardware tokens for PKI solutions**

(30) Priority: 19.12.2001 US 27563
(71) Applicant: TRW INC., Redondo Beach, CA 90278 (US)
(72) Inventor: Aull, Kenneth W., Fairfax, Virginia 22030 (US); Kerr, Thomas C., Fairfax, Virginia 22032 (US); Freeman, William E., Arbutus, Maryland 21227 (US); Bellmore, Mark A., Mt. Airy, Maryland 21227 (US)
(74) Representative: Schmidt, Steffen J., Dipl.-Ing.

(57) **Abstract**

Method and apparatus for centralized processing of hardware tokens for a public key infrastructure (PKI). A commercially available token is received at a secure processing facility. An operating system is installed on the token. A unique key encipherment certificate is created that includes a public key for the token. The unique key encipherment certificate is written onto the token. A Root Certificate Authority certificate is also written onto the token. A unique private key is written onto the token where the unique private key is the matching key for the unique key encipherment certificate. A software package is loaded onto the token. The software package is capable of cryptologically validating future keys and certificates, decrypting the keys and certificates, and installing the keys and certificates in the token.

## Description

### BACKGROUND

### Field of the Invention

This invention relates to Public Key Infrastructures (PKIs), and more specifically to initialization of hardware tokens in a PKI.

### Discussion of the Related Art

A public key infrastructure (PKI) is a collection of servers and software that enables an organization, company, or enterprise to distribute and manage thousands of unique public/private cryptographic keys in a manner that allows users to reliably determine the identity of the owner of each public/private key pair. When each member of an enterprise has a unique key, paper-based business processes may be transitioned to an online, electronic equivalent. Public/private key pairs have the property that for any given public key there exists one and only one private key, and vice versa. Public key cryptography (i.e., the ability to publicly distribute the encryption key) can be used to digitally sign documents. If a particular message can be decrypted using one member of the key pair, then the assumption is that the message must have been encrypted using the other member. If only one person knows the key used to perform the encryption of a document in the first place, then the recipients that can decrypt the document can be sure that the sender of the document must be that person.

However, for a digital signature to be meaningful, the recipient of an object signed with the digital signature must first be able to reliably determine the owner and integrity of the key used to sign the object. Public infrastructures accomplish this using an electronic document called a digital certificate. Certificates may contain information identifying the owner of the key pair, the public component of the pair, and the period of time for which the certificate is valid. The certificate may also identify technical information about the key itself, such as the algorithm used to generate the key, and the key length. Certificates are generated by organizations, companies, or enterprises that are responsible for verifying the identity of individuals (or in some instances organizations) to which certificates are issued. The certifying organization is known as a certificate authority. The certificate authority signs each certificate using a private key known only to the certificate authority itself. This allows users of the PKI to verify both the integrity of the certificate and the identity of the authority that issued it. By issuing a certificate, a certificate authority is stating that it has verified that the public key that appears in the certificate (and, by extension, the corresponding private key) belongs to the individual listed in the certificate. The integrity with which the registration process operates is, therefore, of great importance. The process must provide mechanisms for reliably identifying the individual and for verifying that the public key listed in the certificate belongs to that individual.

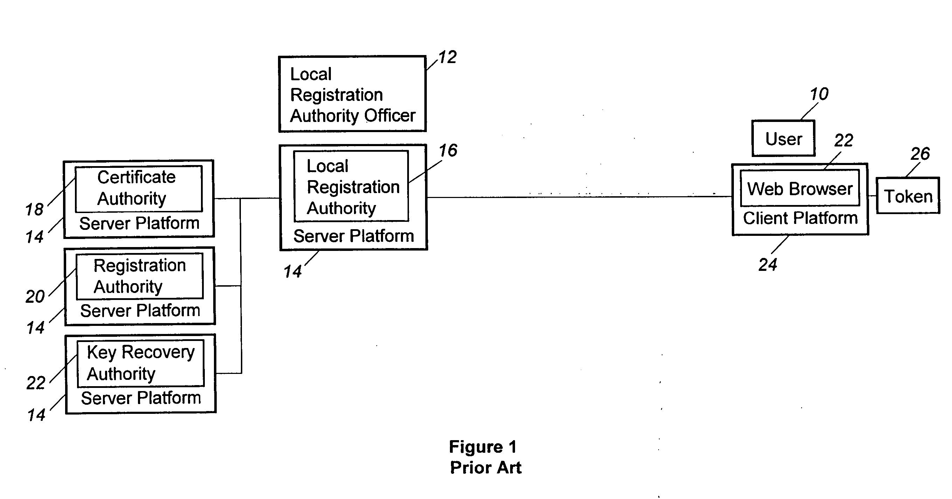

Fig. 1 shows a block diagram of an example PKI system architecture. Current PKIs that provide strong authentication of user identity accomplish this via the use of a local registration authority officer (LRAO) 12. LRAO 12 operates at a work station or server platform 14 that runs a local registration authority software application 16. Server platform 14 may be any known computing device that may serve as a server, e.g., computer, workstation, etc. The local registration authority application 16 interfaces to other server platforms that may contain applications such as a certificate authority application 18, a registration authority application 20, and/or a key recovery authority application 22. Each application may be on the same server platform, or on separate individual server platforms 14. A user 10, that uses or desires access to the PKI system architecture, accesses the system via a web browser 22 on a client platform 24. A hardware token 26, such as a smart card, may also be operably connectable to client platform 24. Typically in current systems, user 10 presents a photo I.D. to the local registration authority officer 12 in order to authenticate the user's identity. Local registration authority officer 12 then uses workstation 14 and local registration authority application 16 to signal a registration authority application 20 to register new user 10 in the system. Local registration authority application 16 may be off-the-shelf product software that comes typically bundled with a certificate authority application 18, registration authority application 20, and key recovery authority 22 software.

A public/private key pair is generated by either the local registration authority application 16 or the registration authority application 20 (depending on products chosen and depending on how they've been configured). The public key is sent to certificate authority application 18 to be signed, thereby, generating a certificate for new user 10. A backup copy of the private key may also be sent to key recovery authority application 22, however, normally the private key is kept on a token 26, or at client platform 24 by user 10. Once the public key is sent to a certificate authority 18 and signed, a user certificate is generated and provided to a local registration authority server. Local registration authority officer 12 copies the certificate (including the private key) onto a floppy disk, hardware token, or other storage medium, and then provides the certificate/private key to the user.

Different enterprises generally use different PKIs. For example, if enterprise-A wishes to grant access to a server that is part of enterprise-A PKI for a user from a different enterprise, e.g., enterprise-B, server A cannot authenticate the identity of the user from enterprise-B since the user from enterprise-B is not a part of enterprise-A's PKI, and presents a signature certificate from enterprise-B's PKI for authentication.

When building a Class 4 (token-based) Public Key Infrastructure, there is no automatic way to determine the pedigree of a token used within the PKI. If a token is intercepted, the software on the token can be changed, and/or attack software added. This problem has been previously solved by either ignoring the problem, or maintaining strict control over the tokens from the time they leave the manufacturing process until the token is loaded with an end-entity certificate in a controlled and trusted environment. This process is man power intensive and expensive.

Tokens arriving at a certificate management system (CMS) facility may or may not come directly from the manufacturer. The CMS has no reason to believe that the token has or has not been modified from its expected configuration. It is crucial that these tokens be verified to make sure that they have the correct operating system and associated software installed. Tokens must also receive the certificate issued by the root certificate authority. This programming of the token is essential to the change of information security, as it allows the token to validate future transmissions as having come from this "parent" authority. This process is generally handled in an insecure and haphazard way. For example, in current methods, the root public certificate is delivered via the installation of the client operating system or browser. This is subject to attack in the delivery or during installation on the client machine. Another current method is to allow for the delivery of the root public certificate from a website via secure sockets layer (SSL). This can be attacked via a Trojan horse on the client machine, or subsequent attack of the client post delivery of the root public certificate. Another method used is delivery via portable media. However, this can be easily compromised and the client machine compromised in the future.

In a typically PKI solution, tokens are prepared for use on designated workstations. The workstations are often numerous and may be widely dispersed to cover a large operational territory for an organization. These workstations need to be "trusted", requiring thorough measures in their setup and maintenance to insure that their integrity for security purposes is not compromised. This security concern also dictates that these workstations be kept in a secure location, sometimes requiring that such a location be established in places where a facility does not otherwise have such a capability. Moreover, these workstations each require the addition of key generation equipment to allow for acceptable token creation times. This equipment is effective but is also very costly.

Moreover, CMS for a public key system using tokens have traditionally depended on the token supplier to provide the same operating system and software for each delivered token. Even when the supplier is responsible, as noted previously, the system is open to attack by interception of the token in the transportation and storage process of the system. A well known attack is to intercept a token, and replace the internal software with entirely new software.

Therefore, there is need for methods and systems to increase the security of the token creation process and reduce its overall cost without significant sacrifice of token production efficiency. Further, there is a need for methods and systems that deliver a root certificate to a token in a fully trusted environment.

### SUMMARY OF THE INVENTION

The present invention is directed to a method for centralized processing of hardware tokens for PKI solutions that includes: receiving a commercially available token at a secure processing facility; installing an operating system on the token; creating a unique key encipherment certificate that comprises a public key for the token; writing the unique key encipherment certificate onto the token; writing a Root Certificate Authority certificate onto the token; writing a unique private key onto the token, where the unique private key is the matching key for the unique key encipherment certificate; and loading a software package onto the token. The software package is capable of cryptologically validating future keys and certificates, decrypting the keys and certificates, and installing the keys and certificates in the token.

The present invention is further directed to a system for centralized processing of hardware tokens for PKI solutions that includes a token, a token initialization machine, a secure processing facility, and a Root Certificate Authority. The token is connectable to the token initialization machine. The Root Certificate Authority signs certificates of the secure processing facility. The secure processing facility receives the token and uses the token initialization machine to install an operating system on the token, write a unique key encipherment certificate onto the token and to a local database, write a certificate of the Root Certificate Authority onto the token, write the matching unique private key onto the token, and load a software package onto the token. The software package is capable of cryptologically validating future keys and certificates, decrypting the keys and certificates, and installing the keys and certificates in the token.

Moreover, the present invention is still further directed to an apparatus comprising a storage medium containing instructions stored therein. The instructions when executed cause a computing device to perform: receiving a commercially available token; installing an operating system on the token; writing the unique key encipherment certificate onto the token and to a local database; writing a Root Certificate Authority certificate onto the token; writing a unique private key onto the token, where the unique private key is the matching key for the unique key encipherment certificate; and loading a software package onto the token. The software package is capable of cryptologically validating future keys and certificates, decrypting the keys and certificates, and installing the keys and certificates in the token.

### BRIEF DESCRIPTION OF THE DRAWINGS

The present invention is further described in the detailed description which follows in reference to the noted plurality of drawings by way of non-limiting examples of embodiments of the present invention in which like reference numerals represent similar parts throughout the several views of the drawings and wherein:

Fig. 1 is a block diagram of an example PKI system architecture;

Fig. 2 is a block diagram of an exemplary system architecture 100 in which Public Key Infrastructure (PKI) processes may be practiced according to an example embodiment of the present invention;

Fig. 3 is a block diagram of a certificate management system according to an example embodiment of the present invention; and

Fig. 4 is a flowchart of a process for centralized processing of tokens according to an example embodiment of the present invention.

### DETAILED DESCRIPTION

The particulars shown herein are by way of example and for purposes of illustrative discussion of the embodiments of the present invention. The description taken with the drawings make it apparent to those skilled in the art how the present invention may be embodied in practice.

Further, arrangements may be shown in block diagram form in order to avoid obscuring the invention, and also in view of the fact that specifics with respect to implementation of such block diagram arrangements is highly dependent upon the platform within which the present invention is to be implemented, i.e., specifics should be well within purview of one skilled in the art. Where specific details (e.g., circuits, flowcharts) are set forth in order to describe example embodiments of the invention, it should be apparent to one skilled in the art that the invention can be practiced without these specific details. Finally, it should be apparent that any combination of hard-wired circuitry and software instructions can be used to implement embodiments of the present invention, i.e., the present invention is not limited to any specific combination of hardware circuitry and software instructions.

Although example embodiments of the present invention may be described using an example system block diagram in an example host unit environment, practice of the invention is not limited thereto, i.e., the invention may be able to be practiced with other types of systems, and in other types of environments.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

The particulars shown herein are by way of example and for purposes of illustrative discussion of the embodiments of the present invention. The description taken with the drawings make it apparent to those skilled in the art how the present invention may be embodied in practice.

Further, arrangements may be shown in block diagram form in order to avoid obscuring the invention, and also in view of the fact that specifics with respect to implementation of such block diagram arrangements is highly dependent upon the platform within which the present invention is to be implemented, i.e., specifics should be well within purview of one skilled in the art. Where specific details (e.g., circuits, flowcharts) are set forth in order to describe example embodiments of the invention, it should be apparent to one skilled in the art that the invention can be practiced without these specific details. Finally, it should be apparent that any combination of hard-wired circuitry and software instructions can be used to implement embodiments of the present invention, i.e., the present invention is not limited to any specific combination of hardware circuitry and software instructions.

Although example embodiments of the present invention may be described using an example system block diagram in an example host unit environment, practice of the invention is not limited thereto, i.e., the invention may be able to be practiced with other types of systems, and in other types of environments.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

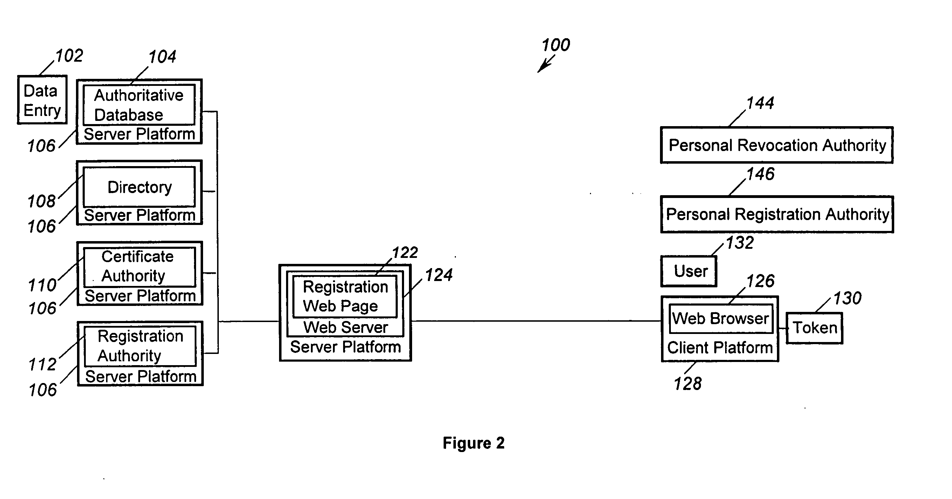

Fig. 2 shows a block diagram of an exemplary system architecture 100 in which Public Key Infrastructure (PKI) processes may be practiced according to an example embodiment of the present invention. The present invention is not limited to the system architecture 100 shown in Fig. 2. The boxes shown in Fig. 2 represent entities that may be hardware, software, or a combination of the two. The entities are operably connected together on a network. Entities not shown as being connected to the network represent one or more human beings that perform the function denoted inside the box.

System architecture 100 includes Data Entry 102 that performs a data entry function for Authoritative Database 104. Authoritative Database 104 is resident on server platform 106. A server platform 106 is referred to in this description but it should be understood that the present invention is not limited to any particular server architecture. Server platform 106 may be, for example, UNIX or Windows NT servers.

Authoritative database 104 contains information about members of the group or enterprise (e.g., company) for which PKI services in accordance with the present invention may be performed. The present invention is not limited by the structure of the group or enterprise for which information is stored in the authoritative database 104. The information contained in Authoritative database 104 may include, for example, the name, address, telephone numbers, manager's name, employee identification, etc., of the members of the group or enterprise. Directory 108 contains the same information contained in database 104, but is optimized for fast look-up of the information stored therein rather than fast data entry. The information contained in Directory 108 may be accessed faster than accessing the information from database 104. Directory 108 functions similar to an on-line quickly accessible phone book, containing reference information about the members of the group or enterprise stored in authoritative database 104.

Certificate Authority 110 may be conventional off-the shelf software executed on server platform 106. Certificate Authority 110 provides storage of certificates and related information. This will be described in more detail hereinafter. Registration authority 112 may also be off-the shelf software executable on server platform 106. Registration authority 112 will also be described in more detail hereinafter.

Registration web page 122, which may be one or more pages, functions as the user interface to system architecture 100 shown in Fig. 1. Web Server 124 is a software application that serves Web Pages (such as web page 122) or other HTML outputs to a web browser client (such as web browser 126). Web Server 124 may be any software application that serves Web Pages or HTML outputs such as, for example, Apache, Microsoft Internet Information Server application, etc.

Web browser 126 is resident on client platform 128 which may be any user computer or computing device. Web browser 126 may be a client software application for browsing web pages such as, for example, HTML protocols, XML protocols, or other protocols. Web browser 126 may be programmed to operate with PKI certificates issued by certificate authority 110. Examples of web browsers that have this capability include Netscape Navigator and Microsoft Internet Explorer. The token 130 may be a smart card, a device with a Universal Serial Bus (USB), or other hardware token device capable of generating, storing, and/or using PKI certificates.

A user 132 is a person that uses or desires access to system architecture 100. User 132 may transition through a number of states that include, for example, a new user, a current user, and a former user. A former user is no longer a member of the group or enterprise.

Personal revocation authority 144 may be one or more people that are in charge of revocation of members from system network 100. Personal registration authority 146 may be one or more people that are in charge of registration of members in system network 100.

A limitation exists with the methods used to securely transport private keys for the User 132 between his Token 130 and the Server Platform 106 of the Certificate Authority 110. In typical PKI architectures, a unique X.509 private key and key encipherment certificate is issued to each Server Platform 106. This is used to create a Secure Socket Layer (SSL) session between the Server Platform 106 and the Client Platform 128, so that all data transferred between these two platforms are encrypted and secure. However, a major security limitation exists because the last "6 inches" of the data path is not encrypted or secure; i.e., the path between the Token 130 and the Client Platform 128 to which it is attached. That data are transferred typically in plain text.

The Client Platform 128 is, therefore, a major point of vulnerability. Malicious code, such as viruses or Trojan horses, running surreptitiously on the Client Platform 128, could corrupt, replace, or intercept data being transferred between the Server Platform 106 of the Certificate Authority 110 and the destination Token 130.

The current invention relates to recognizing that tokens are manufactured with a unique identification number assigned to them and burned into a read-only location on the token. The present invention creates a unique private key and public key certificate for each token. In essence, the Token 130 is treated like any other end-entity in a public key infrastructure. It has a unique identity. The present invention creates a private key and public key certificate for it. Now, Token 130 can be the point of origination or destination of any signed and/or encrypted data communications. In past systems, data transferred from the Server Platform 106 and the Token 130 was encrypted between the Server Platform 106 and the Client Platform 128 and relayed as plain text (unencrypted) between the Client Platform 128 and the Token 130. According to the present invention, data are encrypted all the way from the Server Platform 106 to the Token 130. The Client Platform 128 relays encrypted data, which it cannot decrypt or unwrap. The earlier security vulnerability does not exist.

In method and apparatus for centralized processing of hardware tokens for PKI solutions according to the present invention, the token initialization process is implemented in a centralized secure facility as opposed to many distributed facilities. Once initialized, a token may be inserted at a client workstation and new keys and/or certificates installed on the token remotely in a completely secure, trustworthy, non-interceptable fashion from a Certificate Authority. This avoids the need for a trusted workstation environment. The present invention provides a cost effective way of taking any commercial token and initializing it at a central secure processing facility.

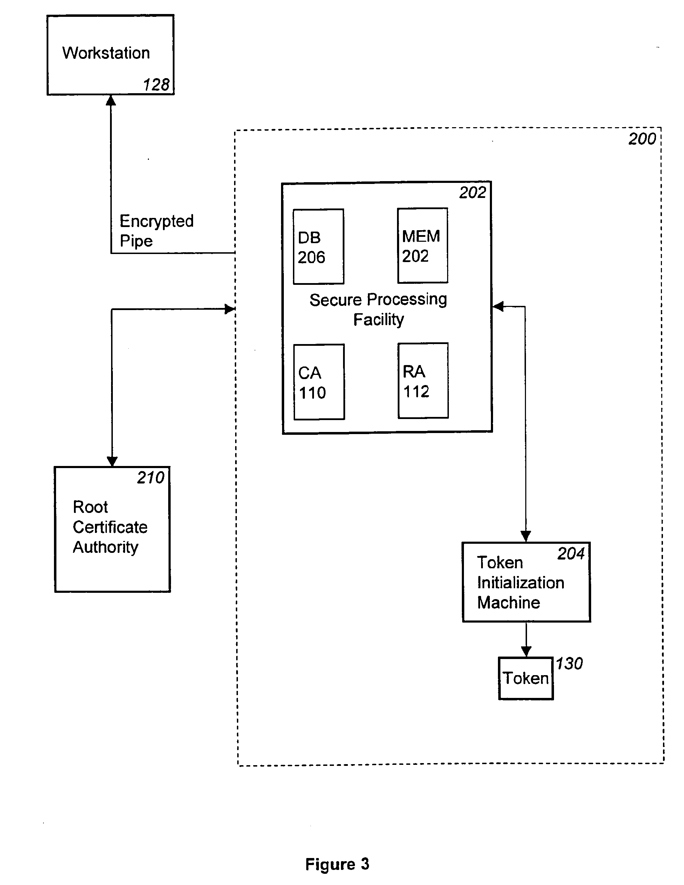

Fig. 3 shows a block diagram of a certificate management system according to an example embodiment of the present invention. A certificate management system (CMS) 200 may include a secure processing facility 202, a token initialization machine 204, and a token 206 connectable to token initialization machine 204. The CMS may have a connection to a Root Certificate Authority 210. Secure processing facility 202 may include a Certificate Authority 110 and a Registration Authority 112. Root Certificate Authority 210 signs all certificates of Certificate Authority 110 at secure processing facility 202. Root Certificate Authority 210 may be seldom used, but signs all online Certificate Authority certificates, and is generally off-line located at a remote location. Secure processing facility 202 may also include a database 206 that may contain a mapping or binding of a person to a token and certificates/keys on the token. Secure processing facility 202 may also include storage 208 for key escrow of different keys for different tokens.

Secure processing facility 202 controls token initialization machine 204 to initialize token 130 with a validated operating system and the appropriate keys and certificates. Before initializing token 130, token initialization machine 204 may wipe token 130 clean (i.e., erase all contents) to ensure that token 130 does not contain any resident alien software or applications. Token 130 may be initialized with an operating system, a unique certificate/private key for the token, a Certificate Authority certificate, and a unique private key. The Certificate Authority certificate may be from a Root Certificate Authority. Moreover, token 130 is loaded with software that allows the installation or modification of other keys and/or certificates that are sent encrypted from a Certificate Authority. Having the certificate of the Certificate Authority on the token allows the token to validate future information (e.g., data, keys, certificates, etc.) exchanges as being from the Certificate Authority. Therefore, once the token is installed at a remote client platform 128, Certificate Authority 110 may use an insecure channel, to transfer new keys and/or certificates to token 130. Consequently, client platform 28, which has token 130 installed, need not be a "trusted" workstation.

By processing tokens within the CMS, the CMS can be assured that the software on the token is certified and validated. Moreover, the CMS can be assured that the Root Certificate Authority (or other Certificate Authority) certificate of the CMS is properly installed on the token and that a unique known private key (e.g., a primary token identity certificate) has been installed on the token. The assignment of this specialized key encryption key (primary token identity certificate) to a token during centralized processing is advantageous in that this non-accessible key encryption key is a private key linked directly to an individual token. This private key enables the token to decrypt key download messages from a Certificate Authority via an encryption wrapper, making the distribution of digital certificates and key pairs to that token invulnerable to compromise via interception or tampering. Each encryption wrapper may be constructed using the public key of the token, and signed by a trusted Certificate Authority of the CMS. By generating a mathematically unique pair of numbers (i.e., a key pair), that are used to uniquely communicate future keys to each and every token used by a CMS, the CMS may construct a secure communication path from the CMS to inside the individual token. As noted previously, this eliminates the need for trusted workstations, and manual security procedures for the tokens.

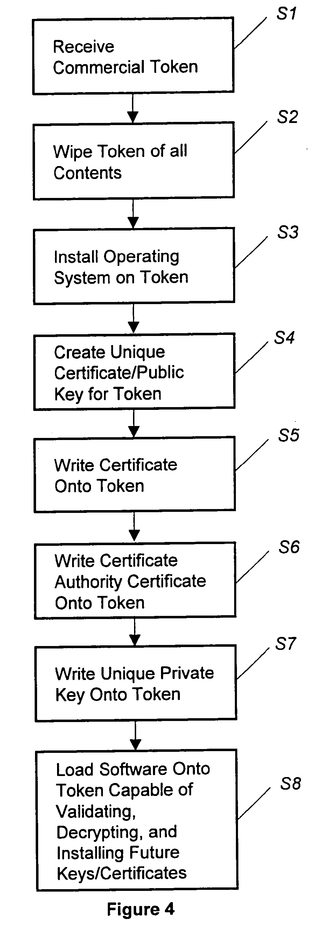

Fig. 4 shows a flowchart of a process for centralized processing of tokens according to an example embodiment of the present invention. Tokens may be dropped shipped from a manufacturer to a secure central processing facility associated with a particular CMS where the tokens are received S1. The secure processing facility may instruct a token initialization machine to wipe all contents of the token S2. An operating system may be installed on the token S3. A unique key encipherment certificate/private key may be created for the token S4. The unique key encipherment certificate/private key may be written onto the token S5. This unique key may be written to a Read Only Memory (ROM) on the token where it is permanently stored. A Root Certificate Authority certificate may be written onto the token S6. A unique private key for the token may be written onto the token S7. Further, a software package capable of cryptologically validating future keys/certificates, decrypting these keys/certificates, and installing the keys/certificates in the token may be loaded onto the token S8.

The token key pair may be generated by a key generation system and the token private key written into protected space on a ROM on the token. This avoids a possible five to twenty minute processing time normally required to generate and validate keys on a typically token. The token public key may be written into the key encipherment certificate by a Certificate Authority and stored in a secure database at the Certificate Authority.

Methods and apparatus according to the present invention are advantageous in that they may become the cornerstone of insuring both the integrity of tokens used in a certificate management system and of the certificates stored on those tokens. The certification and validation of a CMS according to the present invention is never in question, despite changes made by the token vendors. The present invention further solves the problem of dissemination of a Root Certificate Authority certificate in such a way as to avoid compromise. In methods and apparatus according to the present invention, modified tokens cannot be used as Trojan horses to undermine the security of the system. The present invention provides a secure method of delivering future certificates and keying information in an un-trusted environment. Moreover, centralization of production also eliminates threat from a "weak link" workstation not properly secured, thus enhancing overall security. Centralized creation of tokens according to the present invention further eliminates the need for multiple hardware components that are normally needed on each workstation. According to the present invention, high output hardware may be used that produces large amounts of token output, thus allowing for efficient token creation similar to the overall capacity of a distributed creation system.

It is noted that the foregoing examples have been provided merely for the purpose of explanation and are in no way to be construed as limiting of the present invention. While the present invention has been described with reference to a preferred embodiment, it is understood that the words that have been used herein are words of description and illustration, rather than words of limitation. Changes may be made within the purview of the appended claims, as presently stated and as amended, without departing from the scope and spirit of the present invention in its aspects. Although the present invention has been described herein with reference to particular methods, materials, and embodiments, the present invention is not intended to be limited to the particulars disclosed herein, rather, the present invention extends to all functionally equivalent structures, methods and uses, such as are within the scope of the appended claims.

## Claims

1. A method for centralized processing of hardware tokens for PKI solutions comprising:
receiving a commercially available token at a secure processing facility;
installing an operating system on the token;
creating a unique key encipherment certificate that comprises a public key for the token;
writing the unique key encipherment certificate onto the token;
writing a Root Certificate Authority certificate onto the token;
writing a unique private key onto the token, the unique private key being the matching key for the unique key encipherment certificate; and
loading a software package onto the token, the software package capable of cryptologically validating future keys and certificates, decrypting the keys and certificates, and installing the keys and certificates in the token.

2. The method according to claim 1, further comprising wiping the contents of the token after the receiving.

3. The method according to claim 1, further comprising validating the operating system before the installing.

4. The method according to claim 1, further comprising writing the unique key encipherment certificate to a Read Only Memory (ROM) on the token.

5. The method according to claim 1, further comprising:
receiving the commercially available token at a workstation;
installing the token in the workstation; and
performing the installing, first second and third writing, and the loading remotely from the secure processing facility to the token at the workstation.

6. The method according to claim 1, further comprising performing the installing, first second and third writing, and the loading using a DataCard 9000 machine.

7. The method according to claim 1, further performing maintaining a copy of the public key for the token at the secure processing facility..

8. The method according to claim 1, further comprising maintaining a copy of the public key of the token at the secure processing facility.

9. The method according to claim 1, further comprising sending at least one of a new key and a new certificate to the token remotely by the secure processing facility using a secure communication between the secure processing facility and the token, the token being attached to a remote processing device.

10. The method according to claim 9, further comprising encrypting the at least one of the new key and the new certificate using the public key of the token.

11. The method according to claim 10, further comprising validating that the at least one of the new key and the new certificate was sent from the secure processing facility using the Root Certificate Authority certificate on the token.

12. The method according to claim 1, further comprising receiving a request for the token from a user before the installing.

13. The method according to claim 12, wherein the unique key encipherment certificate comprises an identification of the user.

14. The method according to claim 13, further comprising storing a mapping of the user identification, the unique key encipherment certificate, and a serial number of the token in a database at the secure processing facility.

15. A system for centralized processing of hardware tokens for PKI solutions comprising:
a token;
a token initialization machine, the token being connectable to the token initialization machine;
a secure processing facility; and
a Root Certificate Authority, the Root Certificate Authority signing certificates of the secure processing facility, the secure processing facility receiving the token and using the token initialization machine to install an operating system on the token, write a unique key encipherment certificate onto the token, write a certificate of the Root Certificate Authority onto the token, write a unique private key onto the token, and load a software package onto the token where the software package is capable of cryptologically validating future keys and certificates, decrypting the keys and certificates, and installing the keys and certificates in the token.

16. The system according to claim 15, further comprising a crypto accelerator, the crypto accelerator being used by the secure processing facility to create the unique key encipherment certificate and the unique private key, the unique key encipherment certificate comprising a public key for the token.

17. The system according to claim 15, wherein the token comprises a smartcard.

18. The system according to claim 15, wherein the token initialization machine comprises a DataCard 9000 machine.

19. The system according to claim 15, wherein the secure processing center comprises a Certificate Authority.

20. The system according to claim 15, further comprising wherein the identifiers comprise at least one of a Meta tag, label, tag, and a command.

21. The system according to claim 15, wherein the token comprises a commercially available token.

22. The system according to claim 15, wherein the secure processing facility includes:
a database, the database storing a mapping of a user identification, the unique key encipherment certificate, and a serial number of the token; and
a storage device, the storage device storing all public keys on the token.

23. An apparatus comprising a storage medium containing instructions stored therein, the instructions when executed causing a computing device to perform:
receiving a commercially available token;
installing an operating system on the token;
writing the unique key encipherment certificate onto the token;
writing a Root Certificate Authority certificate onto the token;
writing a unique private key onto the token, the unique private key being the matching key for the unique key encipherment certificate; and
loading a software package onto the token, the software package capable of cryptologically validating future keys and certificates, decrypting the keys and certificates, and installing the keys and certificates in the token.

24. The apparatus according to claim 23, the computing device further performing creating a unique key encipherment certificate that comprises a public key for the token.
